# EUROPÄISCHE PATENTANMELDUNG

(11) **EP 2 400 168 A2**
(43) Veröffentlichungstag der Anmeldung: **28.12.2011**
(21) Anmeldenummer: 11166884.4
(22) Anmeldetag: 20.05.2011
(51) Int. Cl.: F16B 35/06

(54) **Schraube und Verfahren zum Identifizieren der Schraube**

(30) Priorität: 23.06.2010 DE 102010030408
(71) Anmelder: HILTI Aktiengesellschaft, 9494 Schaan (LI)
(72) Erfinder: Kuntner, Jochen, 6850, Dornbirn (AT); Schmidt, Peer, 88131 Lindau (DE)

(57) **Zusammenfassung**

Eine Schraube hat einen Schraubenkopf dessen zur Spitze weisende Unterseite Prägungen (10) hat. Die Unterseite ist in wenigstens fünf gleich große Sektoren (14) unterteilt. Drei Fünftel der Sektoren (14) weisen ein identisches Muster aus den Prägungen (10) auf und wenigstens ein Sektor ist mit einem anderen Muster aus den Prägungen oder keiner Prägung (13) versehen.

## Beschreibung

Im Baugewerbe werden Schrauben mittels eines Elektro-Schraubers gesetzt. Die ElektroSchrauber sind mit einer einstellbaren Drehmomentkupplung versehen, welche einen Schraubvorgang beendet, wenn ein Gegendrehmoment der Schraube einen eingestellten Sollwert überschreitet. Bisher stellt ein Anwender den Sollwert mit mehreren Versuchen ein. Eine automatische Einstellung des Drehmoments ist angesichts der Vielzahl verschiedener Schrauben und deren Eigenschaften nur bedingt möglich. Schrauben mit sichtbaren Markierungen an dem Kopf auszustatten, stoßen auf Ablehnung seitens der Kunden, insbesondere wenn die Schraubenköpfe nach einer Montage sichtbar bleiben.

### OFFENBARUNG DER ERFINDUNG

Eine Aufgabe besteht darin, eine Schraube bereitzustellen, welche eine automatische Erkennung unterstützt.

Die vorliegende Erfindung betrifft eine Schraube, deren Schraubenkopf eine zur Spitze weisende Unterseite mit Prägungen hat. Die Unterseite ist in wenigstens fünf gleich große Sektoren unterteilt ist. Drei Fünftel der Sektoren weisen ein identisches Muster aus den Prägungen und wenigstens ein Sektor ist mit einem anderen Muster aus den Prägungen oder keiner Prägung versehen. Die Anzahl der Sektoren liegt vorzugsweise im Bereich zwischen fünf und fünfzehn.

Ein erfindungsgemäßes Identifizierungsverfahren für eine Schraube hat folgende Schritte. Ein Magnetfeld wird im Bereich einer sich drehenden Schraube erzeugt. Eine durch die sich drehende Schraube hervorgerufene Modulation des Magnetfeldes wird mittels eines magnetfeldsensitiven Sensors im Bereich des Schraubenkopfes erfasst. Die erfasste Modulation wird mit in einer Speichereinrichtung abgelegten Modulationsmustern, welche Schrauben zugeordnet sind, verglichen.

Die Prägungen sind in die Unterseite geformte Markierungen. Beim Drehen der Schraube erzeugen die Prägungen eine charakteristische Modulation einer magnetischen

Suszeptibilität. Ein Magnetfeldsenor, z.B. mit einem Permanentmagneten zum Erzeugen eines Magnetfeldes und einer Sensorspule, kann diese Modulation erfassen. Ein Erkennen der Schraube kann basierend auf einem Frequenzspektrum der Modulation erfolgen. Die zueinander drehsymmetrischen Sektoren mit identischem Muster der Prägungen tragen zu einer Amplitude bei einer Grundfrequenz bei. Die Grundfrequenz ist durch die Drehzahl mit der die Schraube gedreht wird und die Anzahl der Sektoren vorgegeben. Zusätzlich zu der Amplitude bei der Grundfrequenz ergeben sich weitere Amplituden bei niederen Frequenzen aufgrund der fehlenden Prägungen, d.h. den nicht drehsymmetrischen Sektoren. Die niederen Frequenzen sind ganzzahlige Brüche der Grundfrequenz, wobei der Nenner der Anzahl der Sektoren ist. Die Verhältnisse der Amplituden und der Frequenzen ergeben eine charakteristische Signatur, welche weitgehend unabhängig von der Drehzahl der Schraubers, der absoluten Stärke von Magnetfeldern, der Sensitivität von Sensoren ist.

Ein Muster von zwei Sektoren wird als identisch angesehen, wenn diese durch Drehen der Schraube um ihre Achse zur Deckung gebracht werden. Der Winkel, um den die Schraube hierfür gedreht werden muss, ist ein ganzzahliges Vielfaches von 360/N Grad, wobei N die Anzahl der Sektoren bezeichnet. Die Muster gelten insbesondere dann als identisch, wenn deren Einfluss auf die räumliche magnetische Suszeptibilität gleich ist. Die Suszeptibilität wird dazu auf Höhe des Schraubenkopfes radial beabstandet zu dem Schraubenkopf an einer festen Winkelposition bestimmt. Scheiben und Strukturen aus nicht magnetisierbaren Materialien, z.B. Kunststoffen, nehmen keinen Einfluss.

Eine Ausführungsform ist dadurch gekennzeichnet, dass eine erste Prägung zu einer zweiten Prägung in einem Drehsinn am nächsten und eine dritte Prägung zu der zweiten Prägung entgegen dem Drehsinn am nächsten ist, dadurch gekennzeichnet, dass ein erster Winkel zwischen der ersten Prägung und der zweiten der Prägung verschieden zu einem zweiten Winkel zwischen der zweiten Prägung und der dritten Prägung ist. Der erste Winkel kann dabei doppelt so groß wie der zweite Winkel sein.

Eine Ausgestaltung sieht vor, dass zwei der Prägungen mit einem kleinsten Winkel beabstandet sind und jede der Prägungen der ersten Prägung in einem ganzzahligen Vielfachen des kleinsten Winkels beabstandet ist. Ausgehend von einer Prägung kann jede Stellung einer weiteren Prägung durch ein mehrfaches Drehen um den kleinsten Winkel erreicht werden. Das ganzzahlige Vielfache liegt beispielsweise im Bereich von 5 bis 15.

Eine Ausgestaltung sieht vor, dass ein radialer Abstand der Prägungen oder wenigstens eines Abschnitts der Prägungen zur Achse größer als zwei sechstel des Durchmessers des Schraubenkopfs ist. Für eine Erkennung der Schraube sind hauptsächlich die Prägungen am Rand der Schraube von Bedeutung. In einem inneren Bereich nahe der Achse können weitere Prägung für andere Zwecke vorgesehen sein. Die weiteren Prägungen können in einer beliebigen Drehsymmetrie oder ohne Drehsymmetrie angeordnet sein.

Eine Ausgestaltung sieht vor, dass die Prägungen radial verlaufende Rillen oder radial verlaufende Rippen sind.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: eine Schraube im Längsschnitt,
- Fig. 2: eine Unterseite der Schraube von Fig. 1;
- Fig. 3: eine alternative Unterseite der Schraube;
- Fig. 4: eine alternative Unterseite der Schraube;

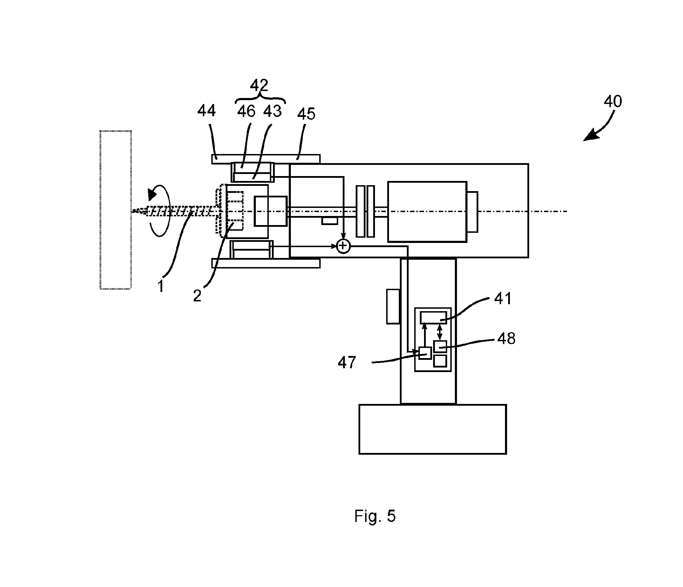

- Fig. 5: einen Schrauber.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

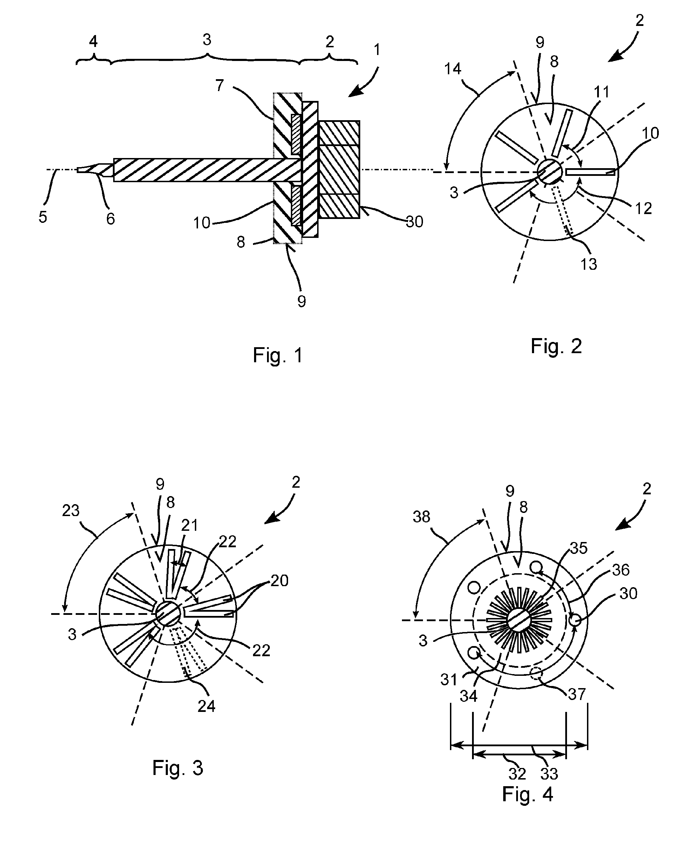

Fig. 1 stellt einen Längsschnitt durch einen beispielhaften Aufbau einer schneidenden Schraube **1bz** dar. Fig. 2 zeigt die Schraube **1 bz** in einer Ansicht von unten. Die Schraube **1bz** weist einen Schraubenkopf **2bz,** ein Gewinde **3bz** und eine Spitze **4bz** längs einer Achse **5bz** auf. Die Spitze **4bz** hat ein oder zwei Klingen **6bz** zum Einbohren in ein metallisches Werkstück, z.B. ein Stahlblech. Die Klingen **6bz** können das Metall spanend abtragen oder umformen, um ein Loch für das Gewinde **3bz** zu erzeugen. Die optionale Zwischenlegscheibe **7bz** aus einem elastischen Kunststoff, zum Beispiel aus Silikon, kann an einer Unterseite **8bz** des Schraubenkopfes **2bz** anliegen. Die Zwischenlegscheibe **7bz** kann als Dichtungselement zum wasserdichten Abschließen des Lochs dienen.

An der metallischen Unterseite **8bz** des Schraubenkopfs **2bz** sind, zumindest in der Nähe des Randes **9bz,** vier weitgehend identische, radial verlaufende, in axialer Richtung vorstehende Rippen **10Cz** vorgesehen. Alternativ können die Rippen **10Cz** in die Unterseite **8bz** eingedrückt als Vertiefungen geformt. Die Rippen **10Cz** sind vorzugsweise aus dem gleichen Material wie der der Schraubenkopf **2bz,** z.B. aus Eisen, Stahl oder einem anderen hart- oder weichmagnetischen Material. Beispielsweise können durch Prägen der Unterseite **8bz** des Schraubenkopfs **2bz** die Rippen **10Cz** hergestellt werden. Die benachbarten Rippen 10Cz sind um einen Winkel **11bz** von 72 Grad oder um einen Winkel **12bz** von 144 Grad zueinander um die Achse **5bz** gedreht angeordnet. Der größte gemeinsame Teiler der Winkel **11bz, 12bz** zwischen den Rippen **10Cz** beträgt 72 Grad. Jede der Rippen **10Cz** kann mit den anderen Rippen **10Cz** durch Drehen der Schraube **1bz** um ihre Achse **5bz** zur Deckung gebracht werden. Die Schraube **1 bz** wird dabei um ganzzahlige Vielfache von 72 Grad gedreht. Die Unterseite **8bz** weist somit nahezu eine fünfzählige Drehsymmetrie auf. Diese wird jedoch durch die Position **13bz** ohne Rippe gebrochen. Bei der Schraube 1bz gelangen jeweils drei der vier Rippen **10Cz** mit einer weiteren Rippe **10Cz** zur Deckung, wenn die Schraube **1 bz** um ein ganzzahliges Vielfaches gedreht wird. Eine der Rippen **10Cz** gelangt jedoch mit der leeren Position **13bz** zur Deckung.

Die Unterseite **8bz** ist in fünf gleichgroße Sektoren **14bz** unterteilt. Gleichgroß soll bedeuten, dass der innere Winkel zur Achse jeweils gleichgroß, in dem Beispiel 72 Grad, ist. In vier der Sektoren **14bz** sind die Rippen **10Cz** angeordnet. Die Anordnung der Rippe **10Cz** ist in jedem der vier Sektoren **14bz** gleich. In dem fünften Sektor **14bz** ist keine Rippe **10Cz** an der Position **13bz** angeordnet, an welcher in den anderen vier Sektoren **14bz** eine Rippe **10Cz** ist.

Fig. 3 zeigt eine weitere Ausgestaltung der Unterseite **8bz** mit vier Paaren von jeweils zwei Rippen **20Cz.** Die Rippen **20Cz** innerhalb eines Paares sind in einem Winkel **21 bz** von 10 Grad zueinander angeordnet. Die Paare bilden ein Muster, welches mehrfach entlang des Umfangs wiederholt wird. Ein Paar gelangt mit einem anderen Paar durch Drehen um einen Winkel **22bz** gleich einem ganzzahligen Vielfachen von 72 Grad zur Deckung. 72 Grad ist der größte Winkel (im sinnvollen Bereich von 0 Grad bis 360 Grad), für welchen eine solche Abbildung gewährleistet ist. Zumindest drei der Paare kommen bei einem beliebig gewählten Vielfachen in eine Stellung, die drei Paare vor dem Drehen eingenommen haben.

Die Schraube könnte auch um kleinere Schritte beispielsweise um ein Grad weitergedreht werden, bis bei einem geeigneten ganzzahligen Vielfachen, nämlich 72, 144 etc. ein Paar die Stellung eines anderen Paares erreicht hat. Bei den meisten Vielfachen in dem Bereich von 1 bis 73 gelangt man jedoch zu keiner Überdeckung der Paare, sondern nur Teile dessen Struktur. Bei einem ganzzahligen Vielfachen gleich zehn, 82, 154 etc. gelangt nur die Hälfte der Rippen **20Cz** in die Stellung anderer Rippen **20Cz** vor dem Drehen.

Die Unterseite **8bz** kann in fünf gleichgroße Sektoren **23bz** unterteilt werden. In vier der Sektoren **23bz** ist ein identisches Muster aus den Rippen **20Cz** vorgesehen. Ein fünfter Sektor **23bz** hat keine Rippen an der Position **24bz,** an der die anderen vier Sektoren **23bz** ihre Rippen **20Cz** angeordnet haben. Hierdurch ergibt sich eine Brechung der fünfzähligen Symmetrie der Unterseite **8bz.**

Fig. 4 zeigt eine weitere Ausgestaltung der Unterseite **8bz.** Kreisförmige Prägungen **25bz** sind in einem äußeren Ring **26bz** der Unterseite **8bz** angeordnet. Der äußere Ring **26bz** hat beispielsweise einen inneren Durchmesser **27bz** von zwei Drittel des Durchmessers **28bz** der Unterseite **8bz.** Nahe der Achse **3bz** in einem inneren Kreis **29bz** können Rippen **30bz** angeordnet sein. Die Rippen **30bz** können aus vielfältigen Gründen vorgesehen sein, z.B. um eine Verzahnung der Unterseite **8bz** mit einem Untergrund zu bewirken. Für die Ausführungsform von Bedeutung sind die Prägungen **25bz** in dem äußeren Kreis **26bz.** Diese sind Winkelabständen **31**bz in ganzzahligen Vielfachen von 72 Grad zueinander angeordnet. An einer Position **32bz,** auf welche die Prägungen **25bz** beim Drehen um 72 Grad zum liegen kommen, ist keine Prägung vorgesehen. Die Unterseite **8bz** hat fünf gleichgroße Sektoren **33bz,** bei denen nur der äußere Ring **26bz** betrachtet wird. Vier der Sektoren **33bz** sind mit gleichen Prägungen **25bz** versehen, ein fünfter Sektor **33bz** ist ohne Prägung an der Position **32bz.**

Ein Schrauber **40Cz,** z. B. ein Elektroschrauber, hat einen Erkennungseinrichtung 41 **bz** für die Schrauben 1 bz. Die Erkennungseinrichtung 41 **bz** beinhaltet einen aktiven Magnetfeldsensor **42bz,** der eine Modulation der magnetischen Suszeptibilität in der Nähe des Schraubenkopfs **2bz** ermittelt. Ein magnetfeldsensitives Sensorelement **43bz** ist längs der Achse **5bz** auf der Höhe des Schraubenkopfs **2bz** angeordnet. Das Sensorelement **43bz** kann beispielsweise an einem vorderen, werkstückseitigen Ende **44bz** eines hülsenförmigen Tiefenanschlags **45bz** des Schraubers **40Cz** angeordnet sein. Ein Permanentmagnet **46bz** des Magnetfeldsensors **42bz** erzeugt ein Magnetfeld, welches den Schraubenkopf **2bz** durchdringt. Das Sensorelement **43bz** erfasst eine Modulation des Magnetfeldes bedingt durch die gedrehten Prägungen und deren Einfluss auf die lokale magnetische Suszeptibilität, z.B. den periodischen Wechsel von eisenhaltigem Material und eisenfreien Material, insbesondere Luft und Kunststoff.

Die Erkennungseinrichtung **41bz** erfasst die Signale der Sensorelements **43bz.** Ein Spektrumanalysator **47bz** ermittelt, welche Frequenzen mit einer signifikanten Amplitude in dem Signal enthalten sind. Aus dem Frequenzspektrum können auch Frequenzen ausgeblendet werden, die größer als eine ermittelte Drehzahl der Schraube 1 **bz** sind. Das Frequenzspektrum wird mit in einem Datenspeicher **48bz** abgelegten Spektren verglichen. In dem Datenspeicher **48bz** sind die Schraubentypen mit zugehörig charakteristischen Spektren abgelegt.

## Patentansprüche

1. Schraube (**1bz**), deren Schraubenkopf (**2bz**) einer zur Spitze (**4bz**) weisende Unterseite (**8bz**) mit Prägungen (**10Cz**, **20Cz**, **50Cz**) hat, und die Unterseite in wenigstens fünf gleich große Sektoren (**14bz**, **23bz**, **51bz**) unterteilt ist, **dadurch gekennzeichnet, dass** wenigstens drei Fünftel der Sektoren (**14bz**, **23bz**, **51**bz) ein identisches Muster aus den Prägungen (**10Cz**, **20Cz**, **50Cz**) und wenigstens ein Sektor mit einem anderen Muster aus den Prägungen oder keiner Prägung versehen ist.

2. Schraube nach Anspruch 1, **dadurch gekennzeichnet, dass** die Unterseite in höchstens fünfzehn Sektoren unterteilt ist.

3. Schraube nach Anspruch 1 oder 2, **dadurch gekennzeichnet, dass** eine erste Prägung (**10Cz**) zu einer zweiten Prägung (**10Cz**) in einem Drehsinn am nächsten und eine dritte Prägung (**10Cz**) zu der zweiten Prägung (**10Cz**) entgegen dem Drehsinn am nächsten ist, **dadurch gekennzeichnet, dass** ein erster Winkel (**11bz**) zwischen der ersten Prägung (**10Cz**) und der zweiten der Prägung (**10Cz**) verschieden zu einem zweiten Winkel (**12bz**) zwischen der zweiten Prägung und der dritten Prägung ist.

4. Schraube nach Anspruch 3, **dadurch gekennzeichnet, dass** der erste Winkel (**11bz**) doppelt so groß wie der zweite Winkel (**12bz**) ist.

5. Schraube nach einem der vorhergehenden Ansprüche, dass zwei der Prägungen mit einem kleinsten Winkel (**11bz**) beabstandet sind und jede der Prägungen der ersten Prägung in einem ganzzahligen Vielfachen des kleinsten Winkels (**11bz**) beabstandet ist.

6. Schraube nach Anspruch 5, **dadurch gekennzeichnet, dass** jede der Prägungen von den anderen Prägungen in einem ganzzahligen Vielfachen im Bereich von 5 bis 15 des kleinsten Winkels (**11bz**) beabstandet ist.

7. Schraube nach einem der vorhergehenden Ansprüche, **dadurch gekennzeichnet, dass** ein radialer Abstand der Prägungen (**50Cz**) oder wenigstens eines Abschnitts der Prägungen zur Achse (**5bz**) größer als zwei Sechstel des Durchmessers (**33bz**) des Schraubenkopfs (**8bz**) ist.

8. Schraube nach einem der vorhergehenden Ansprüche, **dadurch gekennzeichnet, dass** die Prägungen radial verlaufende Rillen oder radial verlaufende Rippen sind.

9. Identifizierungsverfahren für eine Schraube mit den Schritten:
Erzeugen eines Magnetfeldes im Bereich einer sich drehenden Schraube;
Erfassen einer durch die sich drehende Schraube hervorgerufene Modulation des Magnetfeldes mittels eines magnetfeldsensitiven Sensors im Bereich des Schraubenkopfes und
Vergleichen der erfassten Modulation mit in einer Speichereinrichtung abgelegten Modulationsmustern, welche Schrauben zugeordnet sind.

10. Identifizierungsverfahren nach Anspruch 9, **dadurch gekennzeichnet, dass** die Schraube gedreht wird.
